(19) Europäisches Patentamt
European Patent Office
Office européen des brevets

(11) **EP 2 203 998 B1**

(12) **EUROPÄISCHE PATENTSCHRIFT**

(45) Veröffentlichungstag und Bekanntmachung des Hinweises auf die Patenterteilung:
**09.02.2011 Patentblatt 2011/06**

(21) Anmeldenummer: **08799929.8**

(22) Anmeldetag: **23.09.2008**

(51) Int Cl.:
*H04J 3/06* *(2006.01)*    *H04J 3/14* *(2006.01)*

(86) Internationale Anmeldenummer:
**PCT/AT2008/000340**

(87) Internationale Veröffentlichungsnummer:
**WO 2009/039543 (02.04.2009 Gazette 2009/14)**

(54) **VERFAHREN ZUM BESTIMMEN DES PHYSIKALISCHEN TAKTES EINES NETZWERKKNOTENS**

METHOD FOR DETERMINING THE PHYSICAL CYCLE OF A NETWORK NODE

PROCÉDÉ DE DÉTERMINATION DE LA CADENCE PHYSIQUE D'UN NOEUD RÉSEAU

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.09.2007 AT 15032007**

(43) Veröffentlichungstag der Anmeldung:
**07.07.2010 Patentblatt 2010/27**

(73) Patentinhaber:
• **Technische Universität Wien**
 **1040 Wien (AT)**
• **Kompetenzzentrum - Das virtuelle Fahrzeug Forschungsgesellschaft mbH**
 **8010 Graz (AT)**

(72) Erfinder:
• **ARMENGAUD, Eric**
 **A-8045 Graz (AT)**

• **STEININGER, Andreas**
 **A-1230 Wien (AT)**

(74) Vertreter: **Weiser, Andreas**
 **Patentanwalt**
 **Kopfgasse 7**
 **1130 Wien (AT)**

(56) Entgegenhaltungen:
• **ARMENGAUD E ET AL: "Efficient Stimulus Generation for Testing Embedded Distributed Systems The FlexRay Example" 10TH IEEE INTERNATIONAL CONFERENCE ON EMERGING TECHOLOGIES AND FACTORY AUTOMATION,, Bd. 1, 19. September 2005 (2005-09-19), Seiten 763-770, XP010905407 ISBN: 978-0-7803-9401-8**

**Beschreibung**

Die vorliegende Erfindung betrifft ein Verfahren zum Bestimmen des physikalischen Taktes eines ausgewählten Knotens in einem Netzwerk, welcher aus seinem physikalischen Takt ein Taktraster ableitet, auf Grundlage dessen er Datenframes in Sendezyklen an andere Knoten des Netzwerkes sendet, wobei jeder Knoten bei einer Abweichung seines Taktrasters von einer aus den Sendezyklen mehrerer Knoten gebildeten Vorgabe sein Taktraster der Vorgabe bis auf einen Restfehler nachführt, um welchen er seine Sendezyklen zusätzlich periodisch mittels eines Offsets korrigiert.

Netzwerke dieser Art werden auch als Multimaster-TDMA-Systeme bezeichnet, bei welchen mehrere Knoten ("master") durch gegenseitige Beobachtung ihres Sendeverhaltens ihre Taktraster aufeinander abstimmen, um ohne zentrale Taktvorgabe einen kollisionsfreien Zeitmultiplex-Sendebetrieb (time division multiple access, TDMA) zu ermöglichen. Ein Beispiel eines Multimaster-TDMA-Systems ist das Flexray-Protokoll, spezifiziert in "Flexray Communications Systems - Protocol Specification Version 2.1", Flexray Consortium, 2005, verfügbar unter http://www.flexray.com. Das Flexray-Protokoll wurde für zeitkritische und ausfallssichere Echtzeitkommunikationen entwickelt, wie sie zunehmend in der Automobilindustrie (Stichwort "steer-by-wire", "brake-by-wire") Anwendung finden.

Bei Multimaster-TDMA-Netzwerkarchitekturen ist die Qualität der Zeitsynchronisation direkt von den in den einzelnen Knoten verwendeten physikalischen Taktgebern, z.B. Oszillatoren mit Schwingquarzen, abhängig. Oszillatoren, insbesondere Schwingquarze, unterliegen einer Alterung, welche zu Frequenzdrift und Güteabfall führen können. Es ist daher wichtig, den physikalischen Takt eines Knotens in einem solchen Netzwerk für Diagnosezwecke messen zu können, beispielsweise um betriebsgefährdende Abweichungen von der Spezifikation feststellen und einen übermäßig abdriftenden Tatgeber austauschen zu können, bevor ein Totalausfall eintritt.

Die Messung des physikalischen Taktes eines Knotens in einem Multimaster-TDMA-Netzwerk ist in der Praxis jedoch äußerst schwierig. Knoten können geographisch weit verteilt, unzugänglich verbaut oder hochintegriert ("embedded") sein, sodaß der physikalische Taktgeber schwer oder überhaupt nicht mehr zugänglich ist, geschweige denn im laufenden Betrieb.

Ein Verfahren gemäß dem Oberbegriff des Anspruchs 1 ist in Armengaud E. et al: "Efficient Stimulus Generation for Testing Embedded Distributed Systems - The FlexRay Example", 10th IEEE International Conference on Emerging Technologies and Factory Automation, Bd. 1, 19. September 2005, Seiten 763-770, beschrieben.

Die Erfindung setzt sich zum Ziel, ein Verfahren zum Bestimmen des physikalischen Taktes eines Knotens in einem Netzwerk der geschilderten Art zu schaffen, welches keinen direkten Zugang zu dem physikalischen Taktgeber des Knotens erfordert und im laufenden Betrieb ausführbar ist, ohne die Funktionsfähigkeit des Netzwerks im Betrieb zu gefährden.

Dieses Ziel wird mit einem Verfahren der einleitend genannten Art erreicht, das sich gemäß der Erfindung durch die folgenden Schritte auszeichnet:

Anschließen zumindest eines Test-Knotens an das Netzwerk, dessen Sendezyklen in ihren Zykluszeiten vorgebbar sind,

Verändern der Zykluszeiten des Test-Knotens über einen vorgegebenen Bereich,

Messen des Restfehlers des ausgewählten Knotens im genannten Bereich, und

Bestimmen des genannten physikalischen Taktes aus jener Zykluszeit des Test-Knotens, in deren Umgebung der Restfehler des ausgewählten Knotens das Vorzeichen wechselt.

Auf diese Weise wird erstmals eine Fernmessung des physikalischen Taktes eines Knotens in einem Multimaster-TDMA-System möglich. Das Verfahren der Erfindung erfordert keinen Eingriff in den Knoten, sondern lediglich einen Zugriff auf das Kommunikationssystem des Netzwerks, d.h. ist in keiner Weise intrusiv (weder physisch noch aus Datensicht, denn der Dateninhalt der von den Test-Knoten eingespeisten Datenframes ist für die anderen Knoten unbeachtlich, nur ihr Timing ist relevant) und kann sogar im laufenden Betrieb ohne Betriebsstörung durchgeführt werden.

Die Erfindung beruht dabei insbesondere auf der erstmaligen Erkenntnis, daß der - als Dämpfungsfaktor für die Vorgabenbildung dienende - Restfehler in der Taktrasternachführung im Bereich der Synchronisation mit dem physikalischen Takt eines Knotens eine Nichtlinearität im Nulldurchgang besitzt, welche durch Einspeisen einer veränderlichen Taktrastervorgabe in das Netzwerk und Auswerten des zeitlichen Verlaufs des an einem Knoten verbleibenden Restfehlers meßbar ist und damit einen Rückschluß auf den physikalischen Takt erlaubt.

Der Restfehler kann in einer ersten bevorzugten Ausführungsform aus einem Vergleich der vom Test-Knoten vorgegebenen Zykluszeit mit der beobachteten Sendezykluszeit des ausgewählten Knotens gemessen werden, was sich besonders dann empfiehlt, wenn das Multimaster-TDMA-Protokoll in jedem Sendezyklus eine Offsetkorrektur vorsieht.

Gemäß einer alternativen besonders vorteilhaften Ausführungsform wird der Restfehler als der vom ausgewählten Knoten periodisch angewandte Offset gemessen. Dies erübrigt eine Auswertung des eigenen Taktrasters des Test-Knotens und eignet sich insbesondere für Multimaster-TDMA-Protokolle wie das Flexray-Protokoll, bei welchen die Offsetkorrektur nur sporadisch, z.B. in jedem zweiten, dritten usw. Sendezyklus, erfolgt.

Bei Verfahren, bei welchen jeder zweite Sendezyklus offsetkorrigiert wird, ergibt sich damit die Möglichkeit einer besonders vorteilhaften, weil besonders einfachen Auswertung, indem der Offset aus der Differenz der Zykluszeiten zweier aufeinanderfolgender Sendezyklen bestimmt wird.

Gemäß einer weiteren bevorzugten Variante der Erfindung wird das Verändern der Zykluszeiten stufenförmig durchgeführt und der physikalische Takt aus jener Stufe bestimmt, bei welcher - ohne Berücksichtigung der Einschwingphasen zu Stufenbeginn - das Vorzeichen des Restfehlers wechselt. Dies ermöglicht eine besonders genaue Auswertung.

Gemäß einer alternativen bevorzugten Variante, welche auf der Auswertung des vom Knoten angewandten Offsets als Maß für den Restfehler beruht, wird das Verändern der Zykluszeiten linear stetig durchgeführt und der physikalische Takt aus jener Zykluszeit bestimmt, bei welcher sich das Vorzeichen des - um eine Konstante reduzierten - Offsets ändert. Diese Verfahrensvariante ermöglicht eine besonders schnelle Ausführung.

Es versteht sich, daß für den Fachmann die Detektion einer Vorzeichenänderung nach Abzug einer Konstanten gleichwertig bzw. äquivalent zu der Detektion eines sprunghaften Anstieges bzw. Abfalls ist, welche offensichtlichen Äquivalente von der hier verwendeten Definition einer "Vorzeichenwechseldetektion unter Konstantenabzug" mitumfaßt sind.

Die Vorgabe kann auf jede dem Fachmann bekannte Art und Weise gebildet werden. Bevorzugt wird sie als fehlertoleranter Mittelwert oder Mittenpunkt (sog. "fault tolerant midpoint") ermittelt, wie es beispielsweise beim Flexray-Protokoll der Fall ist.

Gemäß einem weiteren bevorzugten Merkmal der Erfindung ist es besonders günstig, wenn gleich mehrere Test-Knoten an das Netzwerk angeschlossen werden, deren Zykluszeiten gemeinsam verändert werden. Bei mittelwertbildenden Multimaster-TDMA-Systemen beschleunigt dies die Geschwindigkeit, mit welcher die mittelwertbasierende Vorgabe verändert werden kann; bei fehlertoleranten Systemen wie dem Flexray-Protokoll können überdies die weiteren Test-Knoten die in der Vorgabenbildung auszublendenden Außenseiterposition besetzen und damit eine konsistente Vorgabenveränderung gewährleisten.

Das erfindungsgemäße Verfahren eignet sich besonders für ein Multimaster-TDMA-System nach dem Flexray-Standard und bevorzugt ist der physikalische Takt, der gemessen wird, die Eigenfrequenz eines Schwingquarzes.

Die Erfindung wird nachstehend anhand von in den beigeschlossenen Zeichnungen dargestellten Ausführungsbeispielen näher erläutert. In den Zeichnungen zeigt

Fig. 1 die an dem Verfahren der Erfindung beteiligten Komponenten eines Netzwerkes in Blockschaltbildform;

Fig. 2 ein Zeitablaufdiagramm der Takthierarchie des Netzwerks;

Fig. 3 ein Diagramm des Restfehlers (Dämpfungsfaktors) bei der Taktrasternachführung (Ratenkorrektur) in einem Knoten;

Fig. 4 ein Zeitablaufdiagramm der Raten- und Offsetkorrektur in einem Knoten nach dem Flexray-Standard;

Fig. 5 beispielhafte Meßwerte einer ersten Ausführungsform des Verfahrens mit stufenförmiger Veränderung der Zykluszeiten der Test-Knoten; und

Fig. 6 beispielhafte Meßwerte einer zweiten Ausführungsform des Verfahrens mit linear stetiger Veränderung der Zykluszeiten der Test-Knoten.

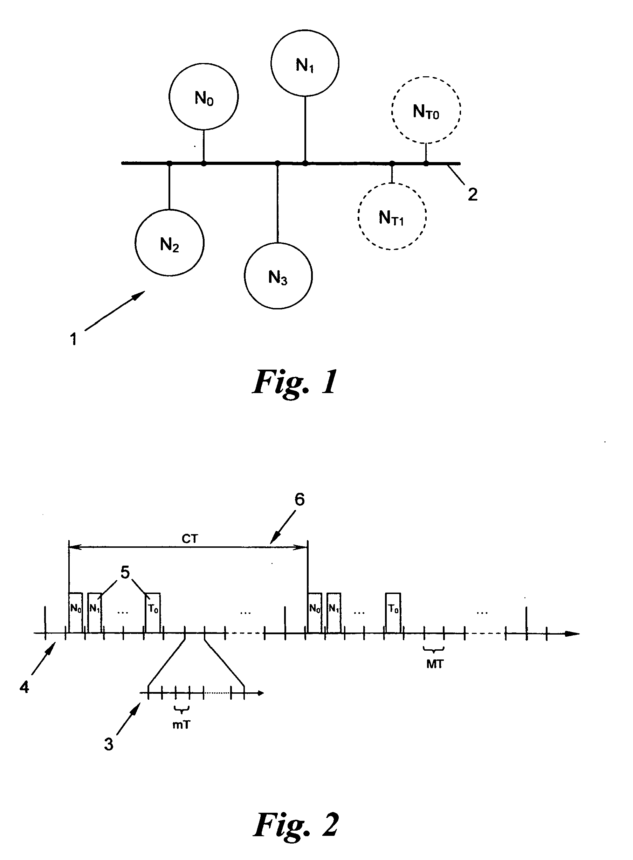

In Fig. 1 ist ein Netzwerk 1 mit einem Zeitmultiplexbus 2 (time division multiple access, TDMA) gezeigt, an welchen vier beispielhafte Knoten $N_0$, $N_1$, $N_2$ und $N_3$ und zwei beispielhafte Test-Knoten $N_{T0}$, $N_{T1}$ angeschlossen sind. Es versteht sich, daß der Bus 2 auch von verzweigter Architektur sein kann, z.B. stern- oder ringförmig, und daß beliebig viele Knoten bzw. Test-Knoten N vorhanden sein können.

Im vorliegenden Beispiel ist das Netzwerk 1 ein Multimaster-TDMA-Netzwerk nach dem Flexray-Standard, für dessen Details auf die einleitend genannte Flexray-Spezifikation verwiesen wird. Im weiteren werden daher nur die für das Verfahren der Erfindung relevanten Teile des Flexray-Protokolls kurz erläutert.

Fig. 2 zeigt die Zeithierarchie eines der Knoten N des Netzwerkes von Fig. 1. Jeder Knoten N verfügt über einen "physikalischen" Takt 3, der von einem physikalischen Taktgeber des Knotens bestimmt wird, beispielsweise einem Schwingquarz. Die einzelnen Takte des physikalischen Taktes 3 werden als "Microticks" mT bezeichnet. Microticks mT können direkt den Takten bzw. Schwingungen des physikalischen Taktgebers entsprechen oder festen Anteilen oder Vielfachen davon.

Aus dem physikalischen Takt 3 bildet jeder Knoten N einen "logischen" Takt in Form eines Taktrasters 4, das sich aus sog. "Macroticks" MT zusammensetzt. Die Granularität der Microticks mT ist feiner als jene der Macroticks MT; in der Regel umfaßt 1 MT etwa 40 bis 240 mT.

Gemäß dem Taktraster 4 sendet jeder Knoten N in durch die Macroticks MT definierten Zeitfenstern Datenframes 5 in Sendezyklen 6 mit einer jeweiligen Zykluszeit CT über den Bus 2 an andere Knoten des Netzwerks 1. In der Regel beträgt 1 CT etwa 200 bis 16000 MT. Auf diese Weise wird der Zeitmultiplexbetrieb (TDMA) auf dem Bus 2 realisiert.

Das Taktraster 4 ist in seinem Takt gegenüber dem physikalischen Takt 3 veränderbar, indem die Anzahl von Microticks mT, welche einen Macrotick MT bilden, eingestellt wird. Dadurch kann das Taktraster 4 eines Knotens N an die Taktraster 4 der anderen Knoten angepaßt werden, wie später noch ausführlicher erörtert wird. Das Anpassen des Taktrasters 4 durch Einstellen der Anzahl von Microticks mT wird auch als Ratenkorrektur ("rate correction") RC bezeichnet. Die Ratenkorrektur RC kann in jedem Macrotick MT vorgenommen werden, oder es wird jeder n-te Macrotick MT um die n-fache Anpassungsdifferenz von Microticks mT verlängert oder verkürzt, beispielsweise jeder zehnte Macrotick MT.

Es ist ersichtlich, daß die Taktraster 4 aller Knoten N des Netzwerks mit hinreichender Präzision synchronisiert sein müssen, damit keine Kollisionen von Datenframes 5 auf dem Bus 2 auftreten. Zu diesem Zweck synchronisieren sich in einem Multimaster-TDMA-System die Knoten 1 gegenseitig wie folgt.

Jeder Knoten N mißt die Zykluszeiten CT der Sendezyklen 6 der anderen Knoten und vergleicht sie mit seiner eigenen Zykluszeit CT, bevorzugt noch ohne die untengenannte Offsetkorrektur, d.h. mit seinem Taktraster 4. Dadurch ergibt sich eine Liste von Abweichungen $\Delta CT$, z.B. in Microticks mT; beispielsweise für den Knoten $N_1$ gegenüber allen Knoten $N_0$, $N_1$, $N_2$, $N_3$, $N_{T0}$ und $N_{T1}$ des Netzwerks 1 als sortierte Liste zu: {15, 11, 6, 0, -3, -5}.

In der Praxis kann jeder Knoten N die Abweichungen $\Delta CT$ gleich direkt aus der Differenz zwischen dem - nach seinem Taktraster 4 - erwarteten und dem tatsächlichen Empfangszeitpunkt (bzw. Sendezeitpunkt, wenn auch die Signallaufzeit berücksichtigt werden soll) eines Datenframes 5 eines anderen Knotens N messen; dies ist für die genannten Zwecke im wesentlichen gleichwertig bzw. äquivalent zu einem Vergleich der Zykluszeiten CT.

Aus den ermittelten Abweichungen bildet jeder Knoten eine Vorgabe $\Delta CT_{av}$ zur Nachführung seines Taktrasters 4, beispielsweise durch Mittelwertbildung oder Bilden eines fehlertoleranten Mittenpunktes (fault tolerant midpoint, FTM). Für Details des FTM-Verfahrens wird auf den einleitend genannten Flexray-Standard verwiesen; kurz gefaßt wird nach Streichung einer vorgegebenen Zahl k von oberen und unteren Extremwerten die Mitte zwischen den verbliebenen Extremwerten berechnet, d.h. im vorliegenden Beispiel mit k = 1 zu:

$$\{ \;\cancel{15}, \;\underline{11}, \;6, \;0, \;\underline{-3}, \;\cancel{-5} \;\} \rightarrow \Delta CT_{av} = (11 + 3) \;/\; 2 = 7$$

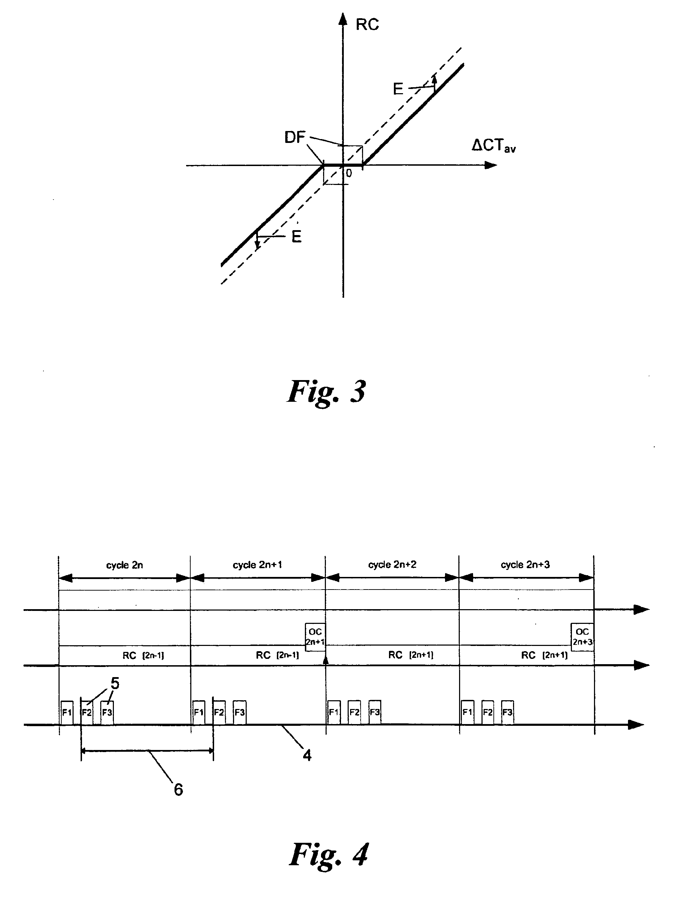

Wie in Fig. 3 gezeigt, wird bei den hier betrachteten Multimaster-TDMA-Systemen das Taktraster 4 der so gebildeten Vorgabe $\Delta CT_{av}$ mittels der Ratenkorrektur RC jedoch nur bis auf einen Restfehler E nachgeführt, welcher einem in das System eingeführten Dämpfungsfaktor DF entspringt. Wie dem Fachmann bekannt, trägt ein solcher Dämpfungsfaktor DF zur Konvergenz und Stabilität von Mittelwert- bzw. FTM-Synchronisationsverfahren bei.

Aus Fig. 3 ist erkennbar, daß die Ratenkorrektur RC im Bereich um den Nullpunkt der Vorgabe $\Delta CT_{av}$, wo offensichtlich keine Anpassung des Taktrasters 4 gegenüber dem physikalischen Takt 3 mittels der Ratenkorrektur erforderlich ist (RC = 0), eine Nichtlinearität besitzt, die gleichzeitig Ursache für einen Nulldurchgang des Restfehlers E ist. Dieser Effekt kann, wie weiter unten erläutert, in der Folge zur Bestimmung des physikalischen Taktes 3 des Knotens herangezogen werden.

Der Restfehler E wird durch gelegentliches Korrigieren der Zykluszeiten CT der Sendezyklen 6 mittels eines entsprechenden Offsets kompensiert, was als Offsetkorrektur ("offset correction") OC bezeichnet wird. Beispielsweise wird jeder einzelne Sendezyklus 6 um jene Anzahl von Microticks mT verkürzt oder verlängert, welche dem Restfehler E entspricht, oder die Offsetkorrektur OC wird nur in jedem n-ten Sendezyklus 6, dann aber gleich im n-fachen Ausmaß angewandt, z.B. in jedem zweiten Sendezyklus 6, wie in Fig. 4 gezeigt.

Zur Bestimmung des physikalischen Taktes 3 eines Knotens N werden nun die Test-Knoten $N_{T0}$, $N_{T1}$ herangezogen. Jeder Test-Knoten $N_{T0}$, $N_{T1}$ ist im wesentlichen gleich aufgebaut wie die Knoten $N_0$, $N_1$, $N_2$ und $N_3$ und implementiert so wie diese das anhand der Fig. 2 bis 4 erläuterte Zeitsynchronisationsprotokoll, jedoch mit der folgenden Abweichung: Die Zykluszeiten CT der Sendezyklen 6 eines Test-Knotens $N_{T0}$, $N_{T1}$ sind frei vorgebbar, um die aus den Sendezyklen CT aller Knoten N des Netzwerkes 1 - und damit auch der Test-Knoten $N_{T0}$, $N_{T1}$ - ermittelte Vorgabe $\Delta CT_{av}$ für alle Knoten N - und damit auch die "normalen" Knoten $N_0$, $N_1$, $N_2$ und $N_3$ - zu beeinflussen.

Das Vorgeben der Zykluszeiten CT der Testknoten $N_T$ kann auf beliebige Art und Weise erfolgen, wie manuell, programmgesteuert z.B. durch Abspielen eines vorgegebenen Musters von Datenframes 5 (im Flexray-Standard: sog. "Sync-Frames"), oder im laufenden Betrieb aufgrund automatischer Messungen (gleichsam "online" konfiguriert), usw.

Im Falle von mehreren Test-Knoten $N_{T0}$, $N_{T1}$ werden deren Zykluszeiten CT gemeinsam, d.h. in der gleichen Art und Weise, verändert. Es versteht sich, daß die Funktionalität einer solchen Mehrzahl von Test-Knoten $N_{T0}$, $N_{T1}$ in einer praktischen Ausführung auch von einem physisch einzigen "Mehrfach"-Test-Knoten $N_T$ realisiert werden kann, welcher die Test-Knoten $N_{T0}$, $N_{T1}$ emuliert und deren Datenframes $T_0$, $T_1$ (Fig. 2) versendet.

Die Anzahl an verwendeten Testknoten $N_T$ entspricht bevorzugt genau jener Zahl k von Fehlerstellen, welche ein fehlertolerantes Vorgabenbildungsverfahren wie das FTM-Verfahren tolerieren kann, plus eins, d.h. k + 1.

Durch fortschreitendes Verändern der Zykluszeiten CT der Test-Knoten $N_{T0}$, $N_{T1}$ über einen vorgegebenen Bereich werden die Knoten $N_0$, $N_1$, $N_2$ und $N_3$ dazu veranlaßt, unter Anwendung entsprechender Ratenkorrekturen RC und Offsetkorrekturen OC ihre Sendezyklen 6 der Vorgabe $\Delta CT_{av}$ nachzuführen.

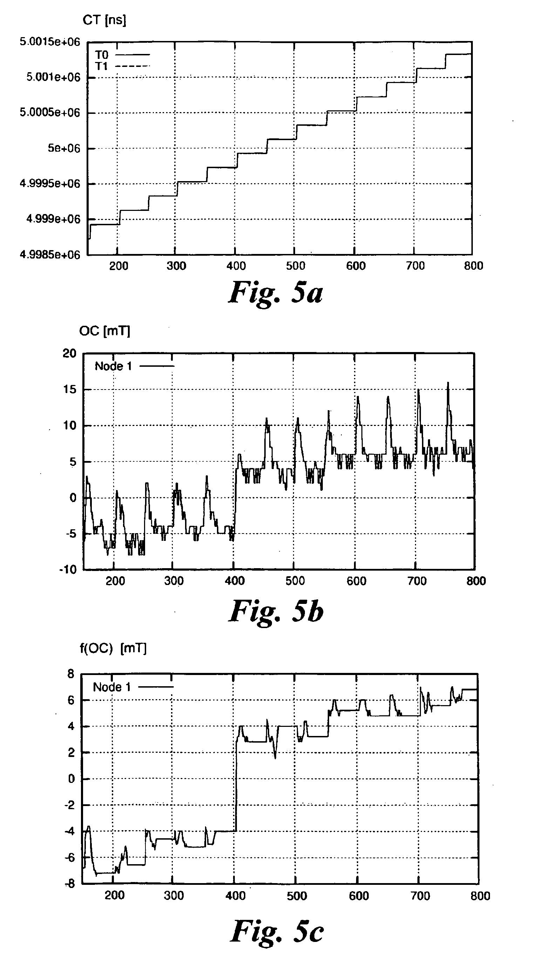

Fig. 5 zeigt eine erste Variante des Verfahrens, bei welcher die Zykluszeiten der Test-Knoten stufenförmig verändert werden. In Fig. 5a sind die (zusammenfallenden) Zykluszeiten CT der Test-Knoten $N_{T0}$ und $N_{T1}$ während 700 aufeinanderfolgender Sendezyklen 6 dargestellt.

Fig. 5b zeigt beispielhaft die Reaktion des Knotens $N_1$ in Form des von ihm angewandten Offsets OC, d.h. seiner Offsetkorrektur, während dieser 700 Zyklen. Wie erörtert ist die Offsetkorrektur OC ein Maß für den Restfehler E. Bei Multimaster-TDMA-Verfahren gemäß Fig. 4, bei welchen die Offsetkorrektur OC nicht in jedem Sendezyklus 6 sondern seltener angewandt wird, kann die aktuelle Offsetkorrektur OC überdies besonders einfach durch Bilden der Differenz der Zykluszeiten CT zweier aufeinanderfolgender Sendezyklen 6, von denen einer eine Offsetkorrektur OC enthält und der andere nicht, ermittelt werden. Da sich die Ratenkorrektur RC in diesem kurzen Zeitraum nur geringfügig ändert, ist ihre allfällige zwischenzeitliche Änderung vernachlässigbar; beim Flexray-Standard wird die Ratenkorrektur RC überdies nur jeden zweiten Sendezyklus aktualisiert, siehe Fig. 4, so daß die Offsetkorrektur OC aus der Differenzbildung zweier Sendezyklen 6 sogar exakt bestimmbar ist.

Wie aus Fig. 5b ersichtlich, zeigt die Offsetkorrektur OC des Knotens $N_1$ zu Beginn jeder Einspeisungsstufe (Fig. 5a) eine Einschwingphase. Ein entsprechendes Ausfiltern dieser Einschwingphase führt zu der gefilterten Kurve von Fig. 5c.

Aus Fig. 5c ist klar erkennbar, daß der Offset OC bis etwa zum Zyklus Nr. 400 bei ca. -5 mT liegt und dann unter Vorzeichenwechsel sprunghaft auf ca. 5 mT ansteigt. Im Bereich des Vorzeichenwechsels, d.h. ca. bei Zyklus Nr. 400, liegt die von den Test-Knoten $N_T$ vorgegebene Zykluszeit CT laut Fig. 5a im Bereich von $4{,}9995 \cdot 10^6$ - $5 \cdot 10^6$ ns. In diesem Bereich liegt somit auch jene Zykluszeit CT des Knotens $N_1$, bei der sein Taktraster 4 offensichtlich keiner Ratenkorrektur RC gegenüber dem physikalischen Takt 3 bedarf. Da die Relation zwischen physikalischem Takt 3 und Zykluszeit CT - ohne Ratenkorrektur RC und Offsetkorrektur OC - aus den Entwurfsparametern des Systems bekannt ist, kann daher aus der ermittelten Zykluszeit von $4{,}9995 \cdot 10^6$ - $5 \cdot 10^6$ ns direkt der physikalische Takt 3 des Knotens $N_1$ bestimmt werden.

Anstelle der in dem Beispiel von Fig. 5 vorgenommenen Auswertung des Offsets OC des zu prüfenden Knotens N könnte, falls gewünscht, auch dessen Restfehler E direkt gemessen werden, beispielsweise durch Vergleichen der jeweils vom Test-Knoten $N_T$ vorgegebenen Zykluszeit mit der am Knoten N beobachteten Zykluszeit.

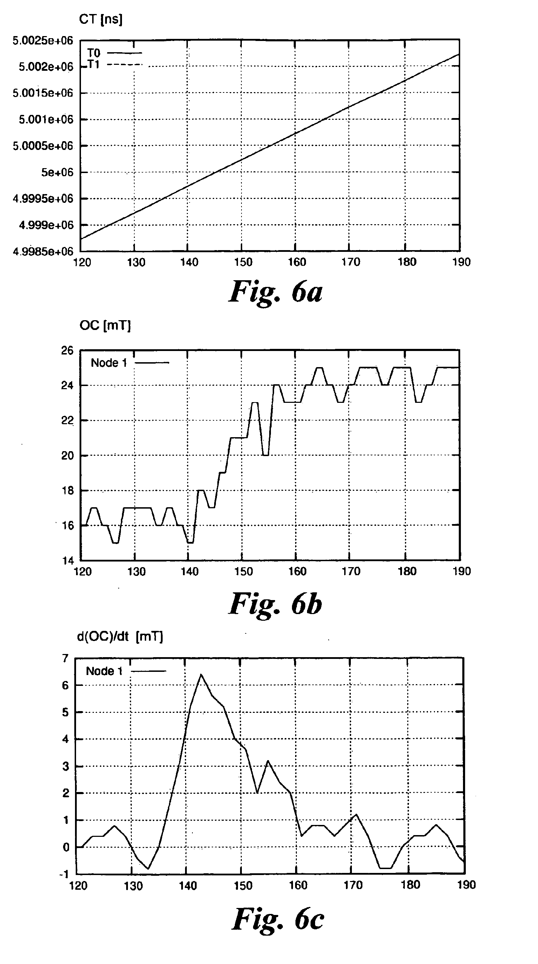

Fig. 6 zeigt eine weitere Verfahrensvariante, bei welcher die von den Test-Knoten $N_{T0}$, $N_{T1}$ vorgegebenen Zykluszeiten CT nicht stufenförmig, sondern linear stetig gemäß Fig. 6a verändert werden. Ein Beispiel der als Reaktion darauf am Knoten $N_1$ beobachteten Offsetkorrekturen OC ist in Fig. 6b gezeigt. Zwischen den Zyklen Nrn. 140 - 150 ist ein sprunghafter Anstieg des Offsets von etwa 16 mT auf etwa 24 mT zu erkennen.

Wird die Kurve von Fig. 6b um ihren konstanten Gleichanteil von etwa 20 mT bereinigt - dieser Gleichanteil ist durch das stetige Nacheilen der Offsetkorrektur hinter der sich stetig ändernden Einspeisung bedingt - bedeutet dies einen Vorzeichenwechsel des Offsets OC im Bereich der Zyklen Nrn. 140 - 150.

Fig. 6c ist eine erste Ableitung der Kurve von Fig. 6b, aus welcher ersichtlich ist, daß das Maximum des sprunghaften Anstiegs der Offsetkorrektur OC bei etwa Zyklus Nr. 143 liegt. Laut Fig. 6a beträgt die von den Test-Knoten $N_{T0}$, $N_{T1}$ eingespeiste Zykluszeit CT hier etwa $4{,}9995 \cdot 10^6$ - $5 \cdot 10^6$ ns. Wie im vorigen Beispiel kann daraus unmittelbar der physikalische Takt 3 des Knotens $N_1$ bestimmt werden.

Das Verfahren der Erfindung läßt sich mit Vorteil auch bei anderen Multimaster-TDMA-Systemen als dem hier im Detail erörterten Flexray-Protokoll anwenden, solange diese auf einer mit einem Dämpfungsfaktor versehenen Ratenkorrektur beruhen. Demgemäß ist die Erfindung nicht auf die dargestellten Ausführungsformen beschränkt, sondern umfaßt alle Varianten und Modifikationen, die in den Rahmen der angeschlossenen Ansprüche fallen.

## Patentansprüche

1. Verfahren zum Bestimmen des physikalischen Taktes (3) eines ausgewählten Knotens (N) in einem Netzwerk, welcher aus seinem physikalischen Takt (3) ein Taktraster (4) ableitet, auf Grundlage dessen er Datenframes (5) in Sendezyklen (6) an andere Knoten (N) des Netzwerkes sendet,
   wobei jeder Knoten (N) bei einer Abweichung seines Taktrasters (4) von einer aus den Sendezyklen (6) mehrerer Knoten gebildeten Vorgabe ($\Delta CT_{av}$) sein Taktraster der Vorgabe bis auf einen Restfehler (E) nachführt, um welchen er seine Sendezyklen (6) zusätzlich periodisch mittels eines Offsets (OC) korrigiert, mit den Schritten:

   Anschließen zumindest eines Test-Knotens ($N_T$) an das Netzwerk (1), dessen Sendezyklen (6) in ihren Zykluszeiten (CT) vorgebbar sind,
   Verändern der Zykluszeiten (CT) des Test-Knotens ($N_T$) über einen vorgegebenen Bereich, **gekennzeichnet durch** die Schritte:
   Messen des Restfehlers (E) des ausgewählten Knotens (N) im genannten Bereich, und
   Bestimmen des genannten physikalischen Taktes (3) aus jener Zykluszeit (CT) des Test-Knotens ($N_T$), in deren Umgebung der Restfehler (E) des ausgewählten Knotens (N) das Vorzeichen wechselt.

**2.** Verfahren nach Anspruch 1, **dadurch gekennzeichnet, daß** der Restfehler (E) aus einem Vergleich der vom Test-Knoten ($N_T$) vorgegebenen Zykluszeit (CT) mit der beobachteten Sendezykluszeit (CT) des ausgewählten Knotens (N) gemessen wird.

**3.** Verfahren nach Anspruch 1, **dadurch gekennzeichnet, daß** der Restfehler (E) als der vom ausgewählten Knoten (N) periodisch angewandte Offset (OC) gemessen wird.

**4.** Verfahren nach Anspruch 3, bei welchem jeder zweite Sendezyklus um den genannten Offset korrigiert wird, **dadurch gekennzeichnet, daß** der Offset (OC) aus der Differenz der Zykluszeiten (CT) zweier aufeinanderfolgender Sendezyklen (6) bestimmt wird.

**5.** Verfahren nach einem der Ansprüche 1 bis 4, **dadurch gekennzeichnet, daß** das Verändern der Zykluszeiten (CT) stufenförmig durchgeführt und der physikalische Takt (3) aus jener Stufe bestimmt wird, bei welcher - ohne Berücksichtigung der Einschwingphasen zu Stufenbeginn - das Vorzeichen des Restfehlers (E) wechselt.

**6.** Verfahren nach Anspruch 3 oder 4, **dadurch gekennzeichnet, daß** das Verändern der Zykluszeiten (CT) linear stetig durchgeführt und der physikalische Takt (3) aus jener Zykluszeit (CT) bestimmt wird, bei welcher sich das Vorzeichen des - um eine Konstante reduzierten - Offsets (OC) ändert.

**7.** Verfahren nach einem der Ansprüche 1 bis 6, **dadurch gekennzeichnet, daß** die Vorgabe ($\Delta CT_{av}$) als fehlertoleranter Mittelwert oder Mittenpunkt (FTM) ermittelt wird.

**8.** Verfahren nach einem der Ansprüche 1 bis 7, **dadurch gekennzeichnet, daß** mehrere Test-Knoten ($N_T$) an das Netzwerk (1) angeschlossen werden, deren Zykluszeiten (CT) gemeinsam verändert werden.

**9.** Verfahren nach einem der Ansprüche 1 bis 8, **dadurch gekennzeichnet, daß** das Netzwerk (1) ein Multimaster-TDMA-System nach dem FlexRay-Standard ist.

**10.** Verfahren nach einem der Ansprüche 1 bis 9, **dadurch gekennzeichnet, daß** der physikalische Takt (3) die Eigenfrequenz eines Schwingquarzes des ausgewählten Knotens (N) ist.

**Claims**

**1.** Method for determining the physical clock (3) of a selected node (N) in a network, which derives a clock pattern (4) from its physical clock (3) and on the basis of said pattern transmits data frames (5) in transmission cycles (6) to other nodes (N) of the network,
wherein when its clock pattern (4) deviates from a given setting ($\Delta CT_{av}$) formed from the transmission cycles (6) of multiple nodes, each node (N) tracks its clock pattern from the given setting to a residual error (E), around which it additionally corrects its transmission cycles (6) periodically by means of an offset (OC), with the steps:

connecting at least one test node ($N_T$) to the network (1), the transmission cycles (6) of which can be predetermined in their cycle times (CT),
varying the cycle times (CT) of the test node ($N_T$) over a predetermined range,
**characterised by** the steps:

measuring the residual error (E) of the selected node (N) in the said range, and determining the said physical clock (3) from that cycle time (CT) of the test node ($N_T$), in the vicinity of which the residual error (E) of the selected node (N) changes the preceding sign.

**2.** Method according to claim 1, **characterised in that** the residual error (E) is measured from a comparison of the cycle time (CT) predetermined by the test node ($N_T$) with the observed transmission cycle time (CT) of the selected node (N).

**3.** Method according to claim 1, **characterised in that** the residual error (E) is measured as the offset (OC) applied periodically by the selected node (N).

**4.** Method according to claim 3, in which every second transmission cycle is corrected by the said offset value, **char-**

**acterised in that** the offset (OC) is determined from the difference of the cycle times (CT) of two consecutive transmission cycles (6).

5. Method according to one of claims 1 to 4, **characterised in that** the variation of the cycle times (CT) is conducted in stages and the physical clock (3) is determined from the stage, in which the preceding sign of the residual error (E) changes - without consideration of the transient phases at the beginning of the stage.

6. Method according to claim 3 or 4, **characterised in that** the variation of the cycle times (CT) is always conducted linearly and the physical clock (3) is determined from the cycle time (CT), in which the preceding sign of the offset (OC) - reduced by a constant - changes.

7. Method according to one of claims 1 to 6, **characterised in that** the given setting ($\Delta CT_{av}$) is determined as a fault-tolerant mean or midpoint (FTM).

8. Method according to one of claims 1 to 7, **characterised in that** multiple test nodes ($N_T$) are connected to the network (1), the cycle times (CT) of which are varied together.

9. Method according to one of claims 1 to 8, **characterised in that** the network (1) is a multimaster TDMA system according to the FlexRay standard.

10. Method according to one of claims 1 to 9, **characterised in that** the physical clock (3) is the natural frequency of a piezoelectric crystal of the selected node (N).

**Revendications**

1. Procédé de détermination de la cadence physique (3) d'un noeud sélectionné (N) dans un réseau, lequel déduit de sa cadence physique (3) un cadencement (4) sur la base duquel il émet des trames de données (5) dans des cycles d'émission (6) vers d'autres noeuds (N) du réseau,
   chaque noeud (N), lors d'une déviation de son cadencement (4) d'une consigne ($\Delta CT_{av}$) formée à partir des cycles d'émission (6) de plusieurs noeuds, asservissant son cadencement sur la consigne jusqu'à une erreur résiduelle (E), avec laquelle il corrige ses cycles d'émission (6) de façon additionnelle et périodique au moyen d'un décalage (OC), le procédé comprenant les étapes consistant à :

   relier un ou plusieurs noeuds de test ($N_T$) au réseau (1) dont les cycles d'émission (6) peuvent être prédéfinis dans leurs temps de cycle (CT),
   modifier les temps de cycle (CT) du noeud de test ($N_T$) dans une plage prédéfinie, le procédé état **caractérisé par** les étapes consistant à :

   mesurer l'erreur résiduelle (E) du noeud sélectionné (N) dans ladite plage, et déterminer ladite cadence physique (3) à partir dudit temps de cycle (CT) du noeud de test ($N_T$), dans l'environnement duquel l'erreur résiduelle (E) du noeud sélectionné (N) change de signe algébrique.

2. Procédé selon la revendication 1, **caractérisé en ce que** l'erreur résiduelle (E) est mesurée à partir d'une comparaison du temps de cycle (CT) prédéfini par le noeud de test ($N_T$) avec le temps de cycle d'émission observé (CT) du noeud sélectionné (N).

3. Procédé selon la revendication 1, **caractérisé en ce que** l'erreur résiduelle (E) mesurée est le décalage (OC) appliqué périodiquement par le noeud sélectionné (N).

4. Procédé selon la revendication 3, avec lequel chaque deuxième cycle d'émission est corrigé dudit décalage, **caractérisé en ce que** le décalage (OC) est déterminé à partir de la différence des temps de cycle (CT) de deux cycles d'émission successifs (6).

5. Procédé selon l'une quelconque des revendications 1 à 4, **caractérisé en ce que** la modification des temps de cycle (CT) est effectuée par paliers et que la cadence physique (3) est déterminée à partir d'un palier dans lequel le signe algébrique de l'erreur résiduelle (E) change sans tenir compte des phases transitoires au début des palier.

**6.** Procédé selon la revendication 3 ou 4, **caractérisé en ce que** la modification des temps de cycle (CT) est effectuée d'une manière continuellement linéaire et que la cadence physique (3) est déterminée à partir du temps de cycle (CT) dans lequel le signe algébrique du décalage (OC), réduit d'une constante, change.

**7.** Procédé selon l'une quelconque des revendications 1 à 6, **caractérisé en ce que** la consigne ($\Delta CT_{av}$) est détectée en tant que valeur moyenne ou point milieu (FTM) tolérant aux pannes.

**8.** Procédé selon l'une quelconque des revendications 1 à 7, **caractérisé en ce que** l'on relie au réseau (1) plusieurs noeuds de test ($N_T$) dont les temps de cycle (CT) sont modifiés conjointement.

**9.** Procédé selon l'une quelconque des revendications 1 à 8, **caractérisé en ce que** le réseau (1) est un système AMRT à plusieurs maîtres selon le système FlexRay.

**10.** Procédé selon l'une quelconque des revendications 1 à 9, **caractérisé en ce que** la cadence physique (3) est la fréquence propre d'un cristal oscillateur du noeud sélectionné (N).

**Fig. 1**

**Fig. 2**

## Fig. 3

## Fig. 4

*Fig. 5a*

*Fig. 5b*

*Fig. 5c*

CT [ns]

*Fig. 6a*

OC [mT]

*Fig. 6b*

d(OC)/dt [mT]

*Fig. 6c*

**EP 2 203 998 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Armengaud E. et al.** Efficient Stimulus Generation for Testing Embedded Distributed Systems - The FlexRay Example. *10th IEEE International Conference on Emerging Technologies and Factory Automation,* 19. September 2005, vol. 1, 763-770